(19) Europäisches Patentamt
European Patent Office
Office européen des brevets

(11) **EP 2 604 981 B1**

(12) **FASCICULE DE BREVET EUROPEEN**

(45) Date de publication et mention
de la délivrance du brevet:
**25.11.2015 Bulletin 2015/48**

(51) Int Cl.:
***G01D 3/036*** *(2006.01)*

(21) Numéro de dépôt: **12196023.1**

(22) Date de dépôt: **07.12.2012**

(54) **Capteur avec des moyens d'auto-test**

Sensor mit Selbsttestmitteln

Sensor with self-test means

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.12.2011 FR 1103823**

(43) Date de publication de la demande:
**19.06.2013 Bulletin 2013/25**

(73) Titulaire: **Thales**
**92400 Courbevoie (FR)**

(72) Inventeurs:
• **Guichard, Philippe**
**26120 CHABEUIL (FR)**
• **Quer, Régis**
**07130 SAINT PERAY (FR)**

(74) Mandataire: **Guérin, Michel**
**Marks & Clerk France**
**Conseils en Propriété Industrielle**
**Immeuble Visium**
**22, Avenue Aristide Briand**
**94117 Arcueil Cedex (FR)**

(56) Documents cités:
**EP-A2- 2 343 505        US-A- 5 608 317**
**US-A1- 2006 162 419**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 2 604 981 B1

**Description**

L'invention concerne les capteurs électroniques fournissant des mesures numériques précises de la valeur d'une grandeur physique avec une tolérance spécifiée. Plus précisément, l'invention concerne un dispositif d'auto-test du capteur, par des moyens embarqués dans le capteur, pour surveiller les pertes de précision du capteur, en informer l'utilisateur du capteur, et en tirer éventuellement des conséquences en termes de correction de la mesure fournie. En effet une perte de précision peut détériorer de manière inacceptable la mesure fournie à l'utilisateur par le capteur, surtout si l'utilisateur n'est pas informé de cette perte de précision.

Selon les applications, la perte de précision et l'absence de connaissance de cette perte peuvent avoir des conséquences graves.

Un exemple typique de capteur est un capteur fournissant une information permettant le calcul d'une altitude d'un avion par rapport au sol. Cette altitude peut être obtenue en partie à partir de capteurs de pression et l'information de pression doit être définie très précisément pour aboutir à une précision d'altitude suffisante. On comprend qu'une erreur sur l'altitude peut avoir des conséquences graves, notamment en phase d'atterrissage ou de survol à basse altitude.

L'invention est particulièrement applicable dans le cas des micro-capteurs électro-mécaniques dits capteurs MEMS (de l'anglais Micro Electro-Mechanical Systems) fabriqués selon les technologies d'usinage collectif de la microélectronique. Sont concernés notamment les capteurs de pression, accélération, rotation qui utilisent souvent des résonateurs micro-usinés. L'invention est applicable aussi à des capteurs d'autres grandeurs telles que le magnétisme.

Il est important, dans les systèmes qui utilisent des capteurs de grande précision, que l'utilisateur connaisse la précision réelle du capteur et non pas une simple précision théorique vérifiée en usine et fournie par le fabricant. Si on dispose d'une référence de calibration, l'utilisateur peut re-calibrer le capteur quand il le souhaite et tenir compte des résultats de la calibration pour revenir à une précision donnée si le capteur s'en est écarté. Mais dans de nombreux cas on ne dispose pas de cette référence de calibration. Par exemple dans un système embarqué dans un véhicule, notamment dans un aéronef, on ne dispose pas de référence de calibration, extérieure au capteur et ayant une précision suffisante.

Dans certains cas, le système dans lequel le capteur est incorporé peut détecter des erreurs sur la mesure fournie par le capteur. Par exemple, le système peut comporter deux capteurs identiques, et une divergence des mesures fournies est une indication d'un dysfonctionnement ; mais cette divergence ne dit pas toujours quel est le capteur défaillant et on peut être obligé d'éliminer les deux capteurs. Avec trois capteurs identiques, le système peut voter et déterminer quel est le capteur défaillant, à condition encore qu'il n'y ait pas de panne simultanée de deux capteurs. Dans un autre exemple, le système utilise d'autres sources d'information indépendantes et effectue une hybridation pour tenir compte des différentes sources pour avoir une mesure la plus vraisemblable ; c'est le cas par exemple pour une mesure d'altitude utilisant plusieurs capteurs tels que : un capteur de pression et/ou un radio-altimètre et/ou un GPS et/ou des capteurs inertiels.

Dans tous ces exemples, c'est le système qui teste le capteur par des moyens extérieurs au capteur.

Ces tests par le système se limitent souvent à une détection de pannes (fonction perdue ou fortement dégradée, fourniture de mesures aberrantes) ; ils ne prennent pas suffisamment en compte des défaillances plus subtiles portant seulement sur un écart par rapport à la précision de mesure spécifiée.

On a déjà proposé des capteurs pourvus de moyens d'auto-test. Ils fonctionnent essentiellement sur le principe de la vérification de vraisemblance des mesures fournies. Par exemple, pour un capteur de pression devant fournir une valeur de pression PR, on vérifie que le résultat du calcul de PR est bien à l'intérieur de la plage de pressions envisagées en utilisation. Et si le calcul de PR utilise une température T mesurée par le capteur, on vérifie que la température fournie est bien dans une plage de valeurs qui a un sens par rapport aux conditions d'utilisation. On a proposé aussi de vérifier la vraisemblance de la consommation de puissance électrique du capteur et de considérer une consommation anormale comme un signe de panne du capteur.

Ces dispositifs existants ne permettent que la détection de défaillances grossières aboutissant à des invraisemblances. Ils ne permettent pas de détecter un écart limité par rapport à la précision de mesure attendue, surtout pour des capteurs de précision fournissant des mesures dont la tolérance relative exigée est meilleure que $10^{-3}$ ou $10^{-4}$ ou $10^{-5}$ rapporté à l'étendue de mesure.

Pour les capteurs de précision qui fournissent une mesure à basse fréquence, et c'est à ceux là qu'on s'intéresse principalement ici, il est important de vérifier les biais de mesure (ou "offsets") et les dérives de ces biais qui peuvent affecter beaucoup la précision des mesures, alors que les causes de ces dérives ne sont pas forcément bien connues ni contrôlables en temps réel.

D'une manière générale, un capteur électronique fournit des mesures d'une grandeur physique (pression, accélération ou autre) par un calcul qui fait intervenir au moins deux paramètres numériques primaires et une fonction mathématique de base ou modèle de base faisant intervenir ces paramètres ; par exemple un capteur de pression peut calculer la pression à partir d'une fréquence directement influencée par la pression et d'une autre fréquence directement influencée par la température. L'un au moins des paramètres primaires est directement influencé par la grandeur à mesurer. Les autres sont influencés par d'autres facteurs (la température par exemple) et ils interviennent dans le calcul. Le calcul se fait à partir d'une fonction mathématique de base ou modèle de base. La mesure de l'ensemble des paramètres primaires, à l'intérieur du capteur, est nécessaire et suffisante pour calculer la valeur de la grandeur à mesurer avec la précision requise en partant du modèle de base.

Les paramètres primaires sont des grandeurs mesurables par le capteur lui-même et manipulables, c'est-à-dire pouvant être traitées par le modèle de base.

Mais on a déjà constaté que la précision de la mesure pouvait être affectée par d'autres paramètres qu'on appellera "paramètres secondaires". Ils n'interviennent pas dans le calcul à partir du modèle de base parce qu'ils sont supposés être stables dans le temps. Si effectivement ils sont stables dans le temps ils n'influent alors pas sur la précision de la mesure. Mais s'ils évoluent, ils peuvent entraîner un risque de perte de précision. Pour un capteur de pression, on peut citer par exemple le coefficient de surtension de la résonance d'une poutre vibrante, ou la tension alternative d'excitation de la résonance de la poutre.

Pour certains paramètres secondaires, on a déjà pu mesurer l'influence qu'ils ont sur la mesure : cette influence peut être définie par un modèle. Pour ces paramètres secondaires il est souhaitable de les contrôler et d'émettre une alerte en cas d'anomalie de valeur de ces paramètres secondaires.

Mais de plus, l'invention part de l'hypothèse que certaines grandeurs internes au capteur, qui devraient être stables, peuvent dériver et avoir une influence, mais une influence non connue et non modélisable, sur la mesure. L'invention propose d'en tenir compte également pour augmenter la couverture des modes de défaillance du capteur.

Ainsi, on définit deux types de paramètres secondaires :

1. les paramètres internes qui ont une influence sur la mesure principale en cas de dérive et dont on connaît un coefficient ou un modèle d'influence,
2. les paramètres internes sans influence connue ou d'influence non modélisable à l'avance.

Un paramètre secondaire du premier type est un paramètre qui a une influence connue sur l'exactitude de la mesure ; ce paramètre est secondaire en ce sens qu'il ne nécessite pas d'être intégré dans le modèle de base en tant que paramètre primaire, parce qu'il ne fait pas partie des paramètres nécessaires et suffisants, à la mise en service du capteur, pour un calcul avec la précision requise. Mais une dérive anormale de ce paramètre est signe d'une anomalie. Le facteur de qualité de la résonance d'un capteur de pression résonant en est un exemple. Les paramètres primaires peuvent influer sur la valeur d'un paramètre secondaire. Un paramètre secondaire du second type est sans influence connue ou d'influence non modélisable à l'avance. Une dérive de ce paramètre peut être signe d'une anomalie.

La consommation d'énergie électrique du capteur en est un exemple. Là encore, les paramètres primaires peuvent influer sur la valeur du paramètre secondaire.

Le document EP 2 343 505 A2 décrit un capteur électronique apte à fournir des mesures numériques précises de la pression d'un médium. Des moyens de calcul de ce capteur établissent des estimations numériques de la pression compensées en température à partir de deux valeurs de pression bruts ainsi que de deux valeurs de température acquises dans la proximité directe des transducteurs de pression à l'aide d'un modèle mathématique de base.

Selon l'invention, on propose un capteur électronique fournissant des mesures numériques précises de la valeur d'une grandeur physique avec une tolérance spécifiée, le capteur comportant des moyens pour établir une valeur numérique d'au moins deux paramètres primaires dont l'un au moins varie avec la grandeur physique et des moyens de calcul pour fournir une estimation numérique de la grandeur physique à partir des paramètres primaires en utilisant un modèle mathématique de base reliant la grandeur physique aux paramètres primaires, caractérisé en ce que le capteur comprend :

- des moyens de mesure d'au moins un paramètre secondaire d'un premier type ayant une influence connue et modélisable sur l'estimation de la grandeur physique,
- des moyens de mesure d'au moins un paramètre secondaire d'un deuxième type n'ayant pas d'influence connue et modélisable sur l'estimation de la grandeur physique,
chacun des paramètres primaires et secondaires pouvant varier en fonction des autres paramètres primaires selon des fonctions d'estimation connues déterminées théoriquement et/ou expérimentalement à la fabrication du capteur,

 - des moyens de calcul d'une estimée de la valeur de la grandeur physique en fonction du modèle de base,
 - des moyens de calcul de l'estimée de la valeur de chaque paramètre secondaire en fonction des valeurs mesurées par le capteur pour les paramètres primaires ;
 - des moyens de calcul de la différence entre la valeur mesurée de chaque paramètre secondaire et les valeurs estimées correspondantes ;
 - des moyens de comparaison de chaque différence, avec un seuil respectif, le résultat combiné des différentes comparaisons représentant une information d'état de fonctionnement du capteur et éventuellement de localisation d'une panne ;

- et, des moyens pour modifier automatiquement, en cas de dépassement d'un seuil pour une différence relative à un paramètre secondaire du premier type, le calcul de la valeur de la grandeur physique à partir d'un modèle mathématique plus complet faisant intervenir ce paramètre secondaire.

De préférence, la modification automatique est effectuée en prenant en compte une valeur de sensibilité, déterminée à la fabrication du capteur, la sensibilité étant un taux de variation de la mesure fournie par le capteur pour une variation donnée du paramètre secondaire qui a donné lieu à un dépassement de seuil.

Le moyen le plus simple de faire la modification automatique est d'ajouter à l'estimation de la grandeur physique, faite avec le modèle de base, un terme correctif qui est le produit de la sensibilité par l'écart entre la valeur mesurée et la valeur estimée pour le paramètre secondaire qui a donné lieu à un dépassement.

Il y a de préférence au moins deux paramètres secondaires du premier type modélisés par des modèles secondaires qui permettent d'estimer leur valeur en fonction des paramètres secondaires. Ces modèles, comme le modèle de base, peuvent résulter de la théorie ou de l'expérience mais sont de toutes façons déterminés avant l'utilisation du capteur, lors des opérations de fabrication, calibration, test du capteur, c'est-à-dire des opérations en usine.

En cas de dépassement d'un seuil pour certains paramètres secondaires, le capteur effectuera de plus un calcul de prévision de perte de précision en fonction du temps, et fournira à l'utilisateur une date prévisible de descente de la précision au-dessous de la tolérance spécifiée pour la mesure de la grandeur physique. Il pourra aussi indiquer à l'utilisateur une date de prévision de cessation de fourniture d'une mesure significative de la grandeur physique.

L'invention est tout particulièrement applicable lorsque le capteur est un capteur de pression, ou d'accélération, ou de rotation. Il est applicable avantageusement aux capteurs utilisant la fréquence de résonance d'une poutre vibrante placée dans une cavité sous vide. Les paramètres primaires sont alors de préférence la fréquence de résonance de la poutre et la température ou la fréquence d'un oscillateur contrôlé par un détecteur de température du capteur.

Un paramètre secondaire du premier type peut être la tension continue de polarisation appliquée à l'électrode d'excitation de la vibration de la poutre résonante. Un paramètre du second type peut être la consommation énergétique globale du capteur (tension d'alimentation multipliée par un courant consommé). La consommation peut être modélisée par rapport à la température (représentée par exemple par une fréquence).

D'autres paramètres secondaires du premier type peuvent être le facteur de surtension de la résonance de la poutre, l'amplitude de la tension alternative appliquée par une boucle d'asservissement à l'électrode d'excitation de la vibration, la phase du courant appliqué à l'électrode d'excitation de la boucle d'asservissement.

D'autres paramètres secondaires du deuxième type peuvent être des paramètres purement électroniques donnant une indication sur l'évolution des paramètres électroniques propres, par exemple une impédance complexe d'un bloc électronique qui peut varier ou non en fonction des paramètres primaires.

Avec le dispositif selon l'invention, on pourra en particulier prendre en compte l'influence du temps sur la précision du capteur, sous forme d'une perte de précision due au vieillissement, sans préjuger de la loi de vieillissement. En effet, certains des paramètres secondaires qu'on peut utiliser peuvent dépendre directement du temps. On peut en donner un exemple dans le cas d'un capteur MEMS résonant; le résonateur interne au capteur dont on va mesurer la fréquence d'oscillation (grandeur primaire) comme paramètre primaire est dans une cavité micro-usinée placée sous vide poussé. Une fuite du scellement de la cavité, ou un dégazage interne à la cavité, peut conduire à une perte lente de la qualité du vide. Cette perte se traduit en particulier par une diminution du facteur de qualité ou coefficient de surtension du résonateur. Ce coefficient de surtension constituant un paramètre secondaire du premier type, n'est pas un paramètre du modèle de base qui sert au calcul de la pression. On peut montrer que toutes conditions étant égales par ailleurs, une détérioration du facteur de surtension induit une erreur sur la mesure de pression. En l'absence de toute dérive temporelle des caractéristiques du capteur, on montre par ailleurs que la valeur du coefficient de surtension dépend uniquement de paramètres primaires du modèle de base, en particulier la température (ou une fréquence représentant la température); il peut également dépendre aussi d'autres paramètres secondaires en cas de dérive de ces paramètres. Dans le cas d'une perte de qualité du vide, on estime que la perte est progressive selon une courbe d'évolution prévisible, non pas à la fabrication mais dès lors que l'on a trois valeurs de dates connues montrant une évolution, et un modèle adapté, par exemple exponentiel ou linéaire ou logarithmique ; dans ce type de situation avec dégradation temporelle progressive, on peut donc prévoir que le dispositif d'auto-test comprend aussi une estimation de ladite courbe en fonction de valeurs du coefficient de surtension correspondant à des dates différentes et un calcul d'échéance temporelle de perte de précision pour fournir à l'utilisateur une indication d'une date à laquelle la précision sera descendue au-dessous d'un seuil acceptable et d'une date à laquelle le capteur sera complètement inutilisable, ou encore d'une date de nécessité de maintenance.

D'autres caractéristiques et avantages de l'invention apparaîtront à la lecture de la description détaillée qui suit et qui est faite en référence aux dessins annexés dans lesquels :

- la figure 1 représente un organigramme général des étapes de fonctionnement du dispositif d'auto-test selon l'invention ;

- la figure 2 représente un schéma de structure générale d'un transducteur de capteur de pression à poutre résonante, micro-usiné en silicium ;
- la figure 3 représente un schéma électrique équivalent de la structure résonante excitée électriquement en vibration ;
- la figure 4 représente un schéma électrique de la boucle d'asservissement servant à entretenir une excitation électrique à la fréquence de résonance de la poutre vibrante ;
- la figure 5 montre des courbes représentant l'influence, sur la phase de la boucle d'asservissement, d'un écart entre la fréquence d'excitation et la fréquence de résonance de la poutre vibrante ;
- la figure 6 montre des courbes réciproques des courbes de la figure 5, représentant l'influence d'un écart de phase sur la fréquence d'excitation ;
- la figure 7 représente des courbes de sensibilité montrant l'impact d'un écart de phase de la boucle d'asservissement sur la mesure finale de pression ;
- la figure 8 représente des courbes de la conductance de la partie résonante de la boucle d'asservissement, en fonction de l'écart entre la fréquence électrique et la fréquence de résonance de la poutre ;
- la figure 9 représente une courbe d'influence de la tension de polarisation de l'électrode d'excitation de la vibration sur la fréquence de résonance ;
- la figure 10 représente une courbe d'influence de l'amplitude de la tension alternative d'excitation de la vibration sur la fréquence de résonance de la poutre ;
- la figure 11 représente une courbe d'influence de la témperature sur le coefficient de surtension de la résonance ;
- la figure 12 représente une courbe d'influence de la perte de vide sur le coefficient de surtension ;
- la figure 13 représente une courbe d'influence de la perte de vide sur la fréquence de résonance ;
- la figure 14 représente un exemple d'enregistrement en phase de test d'une mesure de la fréquence de résonance en fonction de la pression extérieure subie par le capteur pour diverses températures ;
- la figure 15 représente un exemple d'enregistrement en phase de test de mesures de la fréquence d'oscillation d'un oscillateur sensible à la température en fonction de la température et de la pression extérieure ;
- la figure 16 représente un exemple d'enregistrement en phase de test du coefficient de surtension (mesuré par un gain de boucle de contre-réaction) lors du vieillissement du capteur sur 250 heures en présence d'une perte progressive de vide ;
- la figure 17 représente un exemple de calcul de résidus d'estimation sur le coefficient de surtension, et plus précisément sur le gain de boucle qui permet de le mesurer) en fonction de la pression, pour différentes températures, avant et après vieillissement avec perte de vide.

Dans ce qui suit on considère que le capteur comporte au moins :

- un transducteur qui convertit la grandeur physique à mesurer en un signal électrique exploitable, c'est-à-dire un signal électrique qui peut être manipulé pour faire des calculs,
- et des circuits de traitement pour échantillonner le signal, le numériser, faire des calculs, les corriger s'il y lieu, fournir enfin une information de sortie représentant la mesure désirée, et fournir aussi d'autres informations et en particulier des informations de résultat d'auto-test destinés à l'utilisateur.

L'ensemble de ces deux parties, transducteur et circuits de traitement, forme le capteur dans le vocabulaire utilisé ici, capable d'auto-test et incorporé en général à un système de mesure plus complexe pouvant comporter d'autres éléments, y compris d'autres capteurs.

Le transducteur convertit la grandeur physique à mesurer PR en une grandeur manipulable qu'on peut noter Xp1 mais, en pratique Xp1 ne dépend pas que de la valeur de PR ; Xp1 peut dépendre d'autres grandeurs qu'on peut appeler grandeurs d'influence. Par exemple dans le cas des capteurs de pression de type résonant, la grandeur manipulable est d'abord une fréquence sensible à la pression, mais la température intervient toujours aussi comme grandeur d'influence. Pour permettre un calcul de la grandeur physique on va donc élaborer dans le capteur une autre grandeur manipulable Xp2 qui est fonction de la température et qui sera utilisée comme la première Xp1 dans le calcul.

En généralisant, on peut considérer que le capteur peut utiliser n grandeurs manipulables $Xp_1$, $Xp_2$, ....$Xp_i$, ...., $Xp_n$ dépendant de grandeurs d'influence respectives. Ces grandeurs manipulables sont des grandeurs électriques telles qu'une fréquence, une tension, un courant, un gain de boucle, etc., qui peuvent être converties dans le capteur en valeurs numériques pouvant intervenir dans des calculs.

On appellera dans la suite "paramètres primaires" ces grandeurs manipulables. Ils sont primaires en ce sens qu'ils sont en nombre nécessaire et suffisant pour permettre un calcul de la grandeur physique PR à mesurer en fonction des grandeurs d'influence et avec la précision requise si le capteur fonctionne normalement.

On utilisera par ailleurs dans le capteur selon l'invention des paramètres qu'on appellera secondaires. Ce sont d'autres grandeurs internes au capteur, mesurables et manipulables qui ne sont pas utiles au calcul de base de la valeur de la grandeur physique, c'est à dire qui n'interviennent pas dans le modèle de base utilisé en fonctionnement nominal.

On pourrait bien sûr utiliser par principe à la place du modèle principal un modèle plus complet faisant intervenir des paramètres secondaires mais cela introduirait du bruit supplémentaire sans accroissement de précision et c'est pourquoi on ne le fait pas.

On doit distinguer deux parties dans l'explication du dispositif d'auto-test selon l'invention.

La première partie concerne les activités de mise au point du capteur, avant utilisation. C'est une partie traitée en conception, en usine de fabrication, en test, en calibration, (toutes opérations qu'on peut globaliser sous l'appellation "opérations en usine"), c'est-à-dire avant l'utilisation par un utilisateur.

La deuxième partie concerne l'auto-test proprement dit, mis en oeuvre dans le capteur en utilisation, par exemple mis en oeuvre dans un système aéronautique embarqué dans lequel il n'y a plus de possibilités de faire des vérifications par rapport à des étalons de référence.

Dans la première partie, on a accès à des mesures de référence de la grandeur physique à mesurer (ou "mesurande") et de toutes les grandeurs d'influence qui peuvent influencer le calcul de cette grandeur, par des moyens de mesure étalons externes au capteur. On peut alors calibrer le capteur, déterminer sa précision individuelle effective à cet instant, établir un modèle de base de son fonctionnement, c'est-à-dire un modèle de base de calcul d'une valeur numérique représentant la grandeur physique PR à mesurer en fonction des paramètres primaires. Enfin, on peut établir un modèle complet de calcul de la valeur numérique du mesurande PR à partir des paramètres primaires $Xp_i$, i étant un indice variant de 1 à n s'il y a n paramètres primaires, et à partir de paramètres secondaires $Xs_j$, j étant un indice variant de 1 à m s'il y a m paramètres secondaires. Le modèle de base est une fonction d'estimation qui permet d'estimer une valeur numérique de la grandeur physique PR à partir des paramètres primaires seulement. Le symbole ^ placé devant le symbole d'une grandeur signifiera dans ce qui suit l'estimée de cette grandeur.

Ainsi, ^PRb est une estimée de la valeur PR calculée par le modèle de base et on peut écrire :

$$\text{^PRb} = Fb(Xp_1, Xp_2, \ldots Xp_i, \ldots Xp_n)$$

Fb étant la fonction "modèle de base".

De même, ^PRc est une estimée de la valeur PR par le modèle plus complet et on peut écrire :

$$\text{^PRc} = Fc(Xp_1, Xp_2, \ldots Xp_i, \ldots Xp_n, Xs_1, Xs_2, \ldots Xs_j, \ldots Xs_m)$$

Fc étant la fonction "modèle plus complet".

Il existe des interdépendances entre paramètres primaires et secondaires internes au capteur ; ces interdépendance sont évaluées en usine, soit de manière théorique soit de manière individuelle par des mesures selon les paramètres ; si $Xp_i$ et $Xs_j$ sont des valeurs mesurées de ces paramètres (les moyens de mesure étant dans le capteur lui-même), on note $\text{^}Xp_i$ et $\text{^}Xs_j$ des valeurs estimées des mêmes paramètres. Et on peut écrire la dépendance des paramètres secondaires vis-à-vis des paramètres primaires sous la forme suivante :

$$\text{^}Xs_j = fs_j (Xp_1, Xp_2, \ldots Xp_i, \ldots Xp_n),$$

$fs_j$ étant le modèle d'estimation du paramètre secondaire $Xs_j$ ;

Les fonctions d'estimation peuvent être polynomiales ou plus complexes selon les cas. Une estimation par un réseau de neurones est possible.

On établit ces fonctions individuellement pour chaque capteur en usine en déterminant les valeurs de la grandeur physique à mesurer pour différentes valeurs des paramètres primaires et secondaires, et en calibrant ces valeurs par rapport à des mesures de référence qui ne seront plus disponibles lorsque le capteur sera embarqué.

Pour établir la fonction d'estimation d'un paramètre secondaire en fonction des paramètres primaires, on pourra utiliser un processus de calibration individuel, capteur par capteur, grâce au fait que pour chaque combinaison de paramètres primaires, le capteur mesure effectivement les paramètres secondaires de manière autonome.

En usine, un banc de test soumet le capteur à un ensemble de conditions physiques en faisant varier le mesurande et les paramètres primaires, en premier lieu la température.

En chaque point de mesure utilisé pour élaborer le modèle en usine, la référence du mesurande PR est générée et mesurée par le moyen étalon externe au capteur.

Les paramètres primaires et secondaires sont mesurés par le capteur, et acquis par le moyen de traitement de la calibration.

Le moyen de traitement de la calibration élabore les fonctions d'estimations destinées à être incorporées individuellement aux programmes de calculs opérationnels du capteur : fonctions d'estimation de la grandeur physique et des paramètres secondaires notamment, établissement d'un modèle de base qui n'utilise que les paramètres primaires, et d'un modèle plus complet qui peut utiliser en outre un ou plusieurs paramètres secondaires du premier type (avec influence modélisable).

Une fois le capteur calibré en usine et prêt à l'utilisation, on est en fonctionnement opérationnel et le capteur doit délivrer une estimation ^PR de la grandeur physique PR à mesurer, avec une tolérance spécifiée qu'il faut surveiller pendant toute la durée de vie du capteur.

Le fonctionnement du capteur comprend alors les étapes suivantes :

Etape 1 : mesure des paramètres, calculs des estimations, et calculs des résidus bruts

Les paramètres primaires et secondaires sont mesurés par le capteur. Les paramètres secondaires sont par ailleurs estimés avec les fonctions d'estimation élaborées en usine et incorporées aux programmes de calcul dans le capteur.

On calcule des résidus d'estimation $^Xs_j - Xs_j$ des paramètres secondaires ; chaque résidu est la différence entre l'estimation $^Xs_j$ (fonction des paramètres primaires mesurés) et la valeur mesurée du paramètre secondaire.

Les résidus d'estimation des paramètres secondaires vont servir à évaluer ce qu'on peut appeler un "état de santé" du capteur ; en effet, si les résidus sont trop importants, c'est parce que le capteur présente des dérives anormales de certains paramètres et peut donc être considéré comme ne remplissant plus idéalement ses fonctions.

Etape 2 : Analyse de l'état de santé du capteur, diagnostic

Dans l'étape précédente on remarque qu'en pratique on a fait la supposition que le capteur était conçu pour mesurer les paramètres eux-mêmes et pas seulement la grandeur physique. La différence fondamentale est que le capteur dispose d'une référence pour ces paramètres internes : ce sont leurs estimations réalisées grâce aux modèles additionnels, en référence elles-mêmes à la valeur de ces paramètres interne en usine, alors qu'il ne dispose pas d'une référence pour la grandeur à mesurer en situation opérationnelle.

On compare maintenant les résidus calculés à des seuils respectifs. Le dépassement d'un seuil en valeur absolue (l'écart pouvant être dans un sens ou dans un autre) est l'indication d'une dérive du fonctionnement d'au moins un bloc fonctionnel, à laquelle il faut faire attention.

A partir des résidus des paramètres primaires et secondaires, on identifie par un programme d'analyse logique embarqué dans le capteur quels sont les paramètres qui présentent une dérive par rapport au comportement du capteur en usine (dépassement d'un seuil pour le résidu) et on en tire des conclusions sur l'état du capteur.

La pluralité de paramètres secondaires ainsi modélisés et traités permet un diagnostic plus précis et une meilleure localisation de la cause racine de la dérive, en fonction des blocs fonctionnels concernés directement par chaque paramètre.

Le programme d'analyse est établi en phase de conception ou de test du capteur, en fonction de la sensibilité du capteur aux dérives des paramètres secondaires. Par "sensibilité", on entend la variation de la valeur numérique PR fournie en sortie du capteur lorsqu'on fait varier le paramètre secondaire d'une quantité déterminée sans faire varier la grandeur physique à mesurer, indépendamment des autres paramètres ; au premier ordre, c'est mathématiquement la dérivée partielle de PR par rapport audit paramètre en ce point de fonctionnement. Les sensibilités sont déterminées de manière théorique ou bien par caractérisation collective en usine ou enfin par test individuel en usine.

Le diagnostic de la cause de l'écart constaté est plus ou moins précis selon les paramètres qui sont en cause. Par exemple, si le capteur comporte un moyen de mesure de sa propre consommation électrique, la consommation du capteur est un paramètre secondaire ; si on constate qu'elle est anormalement élevée compte-tenu de la valeur mesurée d'un autre paramètre "température", alors on conclut à un dysfonctionnement même si l'on ne peut pas affirmer que l'information de sortie ne conserve pas au moins momentanément sa précision, ni de combien elle est affectée si elle l'est. L'utilisation nouvelle du modèle par rapport aux paramètres primaire rend ce critère plusieurs ordres de grandeur plus précis qu'une comparaison brute de la consommation de manière connue par rapport à des bornes ne dépendant pas de la température. Dans un autre exemple, si le paramètre "coefficient de surtension" d'un résonateur placé dans une cavité sous vide présente une diminution importante par rapport à sa valeur initiale dans les mêmes conditions, on est à peu près sûr que la cause en est une perte de la qualité du vide, et on peut en tirer des conclusions pour le présent et pour le futur. Dans ce même exemple, la présence d'un troisième paramètre secondaire tel que l'impédance complexe du circuit d'asservissement de cette résonnance permet justement de lever l'ambiguïté et de proposer soit un arrêt d'utilisation immédiat dans le cas d'une dérive de l'électronique - car dans ce cas l'effet sur la mesure n'est pas connu - soit un pronostic et une prévision de sortie de tolérance du capteur en continuant à délivrer une mesure.

Ainsi, des diagnostics de causes peuvent être tirés non seulement d'un dépassement de seuil de l'écart entre estimation et mesure d'un paramètre, mais aussi de la combinaison de plusieurs dépassements de seuils correspondant à différents paramètres, donnant une indication sur tel ou tel mode de défaillance.

Etape 3 : Auto-ajustement

Dans certains cas où la dérive constatée pour un paramètre n'est pas excessive mais a un impact sur la précision de la mesure, on peut décider d'effectuer un auto-ajustement de la mesure.

Cet ajustement n'est fait que pour les paramètres secondaires du premier type. Il n'est pas fait pour les paramètres secondaires du deuxième type car par définition il n'y a pas de modèle possible pour un ajustement.

L'ajustement se fait en prenant en compte la connaissance de la sensibilité de l'information de sortie du capteur (appelée sensibilité modale) par rapport au paramètre qui présente une dérive.

De manière la plus simple, l'ajustement se fait directement sur l'information de sortie, c'est-à-dire que dans le cas le plus simple, on rajoute à l'estimation ^PRb une quantité qui est le produit de la sensibilité par l'écart constaté entre l'estimation et la valeur mesurée du paramètre qui a donné lieu à un dépassement de seuil d'écart.

L'estimation auto-ajustée de l'information de sortie est alors :

^PRa = ^PRb + $S_j.(^{\wedge}Xs_j - Xs_j)$, où $S_j$ est la sensibilité du capteur aux variations du paramètre $Xs_j$.

On comprendra que l'auto-ajustement peut également être plus complexe qu'une simple addition d'un produit $S_j.(^{\wedge}Xs_j - Xs_j)$ à la valeur calculée de la grandeur physique.

D'une manière avantageuse, l'auto-ajustement consiste alors à utiliser directement le modèle complet utilisant les paramètres mesurés, primaires et secondaires du deuxième type, y compris le paramètre en dérive, et à faire une estimation ^PRa fondée sur ce modèle, soit en lieu et place du modèle de base en permanence. L'ajustement est fait si la dérive du paramètre secondaire considéré dépasse un seuil. Ce seuil sera avantageusement placé juste au-dessus de l'incertitude de mesure sur ledit paramètre, c'est à dire, juste au-dessus des résidus initiaux du modèle le définissant en usine.

Les limites de l'auto-ajustement sont déterminés a priori par les programmes d'auto-ajustement élaborés en usine. L'auto-ajustement n'est acceptable que si le mode de défaillance correspondant est identifié et localisé précisément, et que ces conséquences sont bornées de manière connue. La composante dynamique de la correction peut être limitée elle aussi ; par exemple, on doit être très prudent sur l'amplitude des corrections acceptables sur l'information de sortie dans le cas où l'information de sortie subit ultérieurement une fonction d'intégration mathématique. En effet, la composante de correction va être intégrée elle aussi et il faut faire attention que la correction n'aboutisse pas à un artefact sur l'utilisation de la mesure.

La fonction d'auto-ajustement ne permet pas forcément de compenser définitivement le défaut détecté, mais elle peut permettre par exemple de continuer à fonctionner avec une précision dans les tolérances spécifiées, ou bien de recentrer la mesure au mieux à l'intérieur desdites tolérances jusqu'à remplacement du capteur lors d'une opération de maintenance du système.

De manière générale, le dépassement d'un seuil par le résidu correspondant à un paramètre peut être soit directement un signe de sortie de la tolérance spécifiée, soit un signe qu'on risque une telle sortie, soit encore un signe qu'il faut procéder automatiquement à un auto-ajustement. Dans chaque cas, le capteur devra fournir à l'utilisateur une information sur la situation détectée.

Etape 4 : pronostic

Pour certains paramètres, la dérive est mathématique continue et monotone en fonction du temps ; elle peut donc être modélisée par rapport au paramètre temps, que l'on appellera date dans la suite pour marquer l'application préférentielle au long terme.

Le capteur selon l'invention utilise avantageusement une entrée d'information temps, ou date actuelle, provenant du système. Il comporte également et de manière connue, des moyens de mémorisation de paramètres à chaque mise sous tension. Les moyens de traitement internes au capteur suffisent alors à établir l'évolution dans le temps des paramètres secondaires. Si on constate une variation croissante de l'écart par rapport à la normale, on sait que cette variation va continuer d'après le modèle de dérive identifié et donc connu. La fonction de pronostic consiste à prévoir le moment où la mesure du capteur ne sera plus fiable pour cause de trop grande perte de précision ; ou même ne sera plus opérationnel pour perte complète d'information de sortie. Le dispositif d'auto-test prévoit dans ce cas une information de pronostic à destination de l'utilisateur ; la première étape d'information donnée peut être par exemple que la précision reste actuellement dans les tolérances spécifiées (avec ou sans auto-ajustement) mais qu'elle en sortira à telle date ; une autre information peut être que la précision n'est plus dans les tolérances spécifiées et que le capteur ne sera plus opérationnel à telle date. L'exemple typique est la perte de précision due à la perte de vide dans la cavité sous vide contenant un résonateur : cette perte est progressive et ses effets dans le temps peuvent être prédits au moins de manière à donner une limite basse du temps restant à la fiabilité de la mesure.

L'information de date de sortie de tolérance ou de date de panne définitive sera de préférence accompagnée d'un intervalle de confiance sur la date pronostiquée.

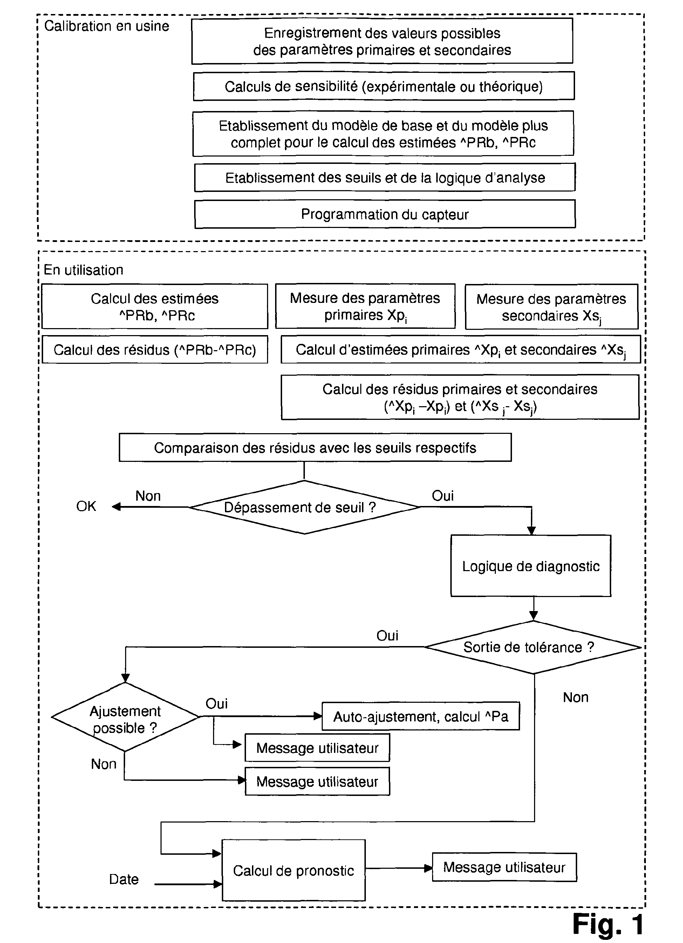

La figure 1 représente en résumé les différentes étapes du de fonctionnement du dispositif d'auto-test, la première étape (calcul des résidus) et la seconde étape (comparaisons en vue d'un diagnostic) étant les plus importantes, les autres (auto-ajustement et pronostic) étant facultatives et ne concernant pas forcément tous les paramètres, en particulier l'étape de pronostic qui ne s'applique qu'à des cas particuliers.

Sur la figure 1, les opérations faites en usine sont distinguées des opérations faites par le capteur en utilisation.

Opérations en usine : enregistrement des valeurs des paramètres primaires et secondaires pour diverses valeurs de la grandeur physique à mesurer, par référence à des étalons de mesure disponibles en usine ; mesures ou calculs de sensibilité de la mesure aux différents paramètres ; établissement du modèle de base en fonction des paramètres primaires, établissement du modèle plus complet en fonction des paramètres primaires et secondaires du premier type, établissement des modèles d'estimation des paramètres secondaires par rapport aux paramètres primaires ; définition de la tolérance acceptable ; établissement des seuils de résidus pour les différents paramètres secondaires ; établissement du programme d'analyse ; programmation du capteur avec toutes ces données pour qu'il puisse ensuite exécuter les procédures d'auto-test.

Procédure d'auto-test en utilisation :

- étape 1, calcul d'estimées, mesures de paramètres, et calcul de résidus
- étape 2 : comparaisons des résidus avec les seuils et diagnostic : détection d'une sortie de la tolérance autorisée, constatation d'une possibilité ou impossibilité (paramètres secondaires du deuxième type) d'ajustement, message à l'utilisateur ; un message peut-être "problème de santé diagnostiqué, ajustement impossible, précision non garantie" ;
- étape 3 : auto-ajustement, dans le cas où il a été diagnostiqué qu'il est possible (dérive d'un paramètre secondaire du deuxième type) ; re-calcul d'une estimée ^Pa de la grandeur physique en tenant compte de la valeur anormale du paramètre en défaut ; message à l'utilisateur qui peut être : "problème de santé diagnostiqué, auto-ajustement déclenché, précision maintenue"
- étape 4, pour certains paramètres : pronostic et notamment pronostic de durée de conservation de la précision ou de durée de fonctionnement encore possible du capteur ; message à l'utilisateur qui peut être dans un premier temps : "problème de santé diagnostiqué, pas d'impact sur la précision, sortie de tolérance prévisible dans X jours, avec un indice de confiance de Y" ; dans un deuxième temps : "sortie de tolérance, précision non garantie, fonctionnalité perdue dans X jours avec un indice de confiance de Y".

## CAS ILLUSTRATIF D'UN CAPTEUR DE PRESSION

On va décrire le dispositif d'auto-test à propos d'un capteur de pression MEMS dont le transducteur est micro-usiné à partir de plaques de silicium. Par simplicité, on choisit l'exemple d'un capteur de type résonant. Ce cas est facilement transposable à un capteur d'accélération ou de rotation puisque les structures micro-usinées de ces capteurs sont très similaires.

Le capteur de pression illustratif de l'invention est un capteur à résonateur à poutre vibrante. C'est une poutre placée dans une cavité sous vide fermée par une membrane fine qui subit la pression atmosphérique extérieure, laquelle constitue la grandeur physique PR à mesurer. La poutre est reliée d'un côté à la membrane et est de ce fait soumise à une tension longitudinale du fait de la déformation de la membrane en présence d'une pression. La tension de la poutre dépend donc de la pression à mesurer.

La fréquence de résonance dépend de la tension mécanique axiale - autrement dit la force ou contrainte selon l'axe - de la poutre. Si on appelle $\sigma$ la contrainte axiale exercée sur la poutre, $Fr_0$ la fréquence de résonance au repos, et $\sigma_c$ la contrainte critique de flambage de la poutre, on peut considérer que la fréquence de résonance Fr en présence de la contrainte axiale s est donnée par la relation :

$$Fr = Fr_0(1+\sigma/\sigma_c)^{1/2}$$

On va mesurer la fréquence de résonance Fr et la théorie permet de remonter à la contrainte axiale $\sigma$ et par suite à la pression atmosphérique PR qui engendre cette contrainte.

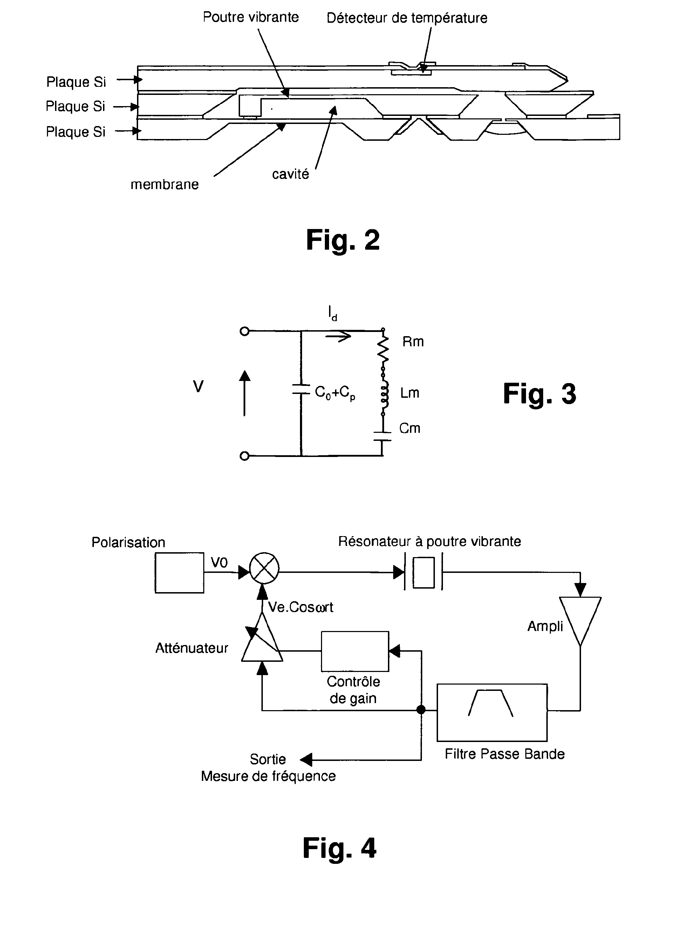

Un tel capteur, ou plus exactement la partie "transducteur" de ce capteur, est schématisé sur la figure 2. Le reste du capteur, c'est-à-dire l'électronique qui excite l'oscillation de la poutre vibrante et qui traite les signaux de sortie du transducteur, est formé sur une carte électronique sur laquelle le transducteur est reporté, le plus souvent sous forme d'une cellule, c'est à dire d'un boitier de petites dimensions qui contient le transducteur. On appelle également « élément sensible » ou « détecteur » le transducteur en silicium micro-usiné. Cette carte n'est pas représentée.

La figure 3 représente un schéma équivalent électrique du transducteur mécanique mis en oscillation par une excitation électrique. On peut considérer le transducteur comme un circuit résonant série.

V est la tension d'excitation qui est la somme d'une composante continue de polarisation V0 et d'une tension alternative d'amplitude Ve asservie à la fréquence de résonance Fr (pulsation $\omega$r) de la poutre.

$$V = V0 + Ve.\cos(\omega r.t)$$

Le circuit résonant comporte alors une inductance équivalente Lm, une résistance série Rm et une capacité Cm. Le tout est en parallèle sur la capacité $C_0$ existant entre la poutre vibrante et l'électrode d'excitation, et une capacité parasite Cp résultant du reste de la structure.

En pratique, la vibration de la poutre est entretenue par des forces électrostatiques produites par un signal électrique oscillant dont la fréquence s'asservit automatiquement à la fréquence de résonance de la poutre, et on mesure cette fréquence d'oscillation électrique. Une boucle d'asservissement représentée à la figure 4 permet d'entretenir la vibration à cette fréquence. Cette boucle comprend l'application d'une tension de polarisation continue V0 à une électrode d'excitation en couplage capacitif avec la poutre ; à cette tension V0 vient se superposer la tension alternative d'amplitude Ve à la fréquence de résonance. C'est de cette boucle qu'on sort la mesure de fréquence de résonance qui va servir au calcul de la pression.

La situation serait la même avec un capteur d'accélération dont la structure résonante est soumise à une contrainte par une masse sismique soumise à une accélération dans un axe sensible déterminé qui transmet mécaniquement la contrainte induite à la structure vibrante. On peut alors remonter à l'accélération si on mesure la fréquence de résonance.

Les équations qui régissent la relation entre la pression PR et la fréquence de résonance du capteur de pression font en pratique intervenir aussi un paramètre important qui est la température puisque la température induit des dilatations longitudinales de la poutre, modifiant la tension donc la fréquence de résonance. C'est aussi vrai pour tous les autres types de capteurs, même purement statiques comme les capteurs à jauges résistives ou à variation capacitives.

Le modèle de base qui permet d'établir le calcul de la pression est établi à partir des deux grandeurs d'influence que sont la pression et la température, ce qui se traduit par le fait que le modèle de base utilise deux paramètres primaires qui sont la fréquence de résonance Fr et un signal représentant la température. Par simplicité d'écriture, on prend l'exemple où le deuxième paramètre primaire est une fréquence Ft d'un oscillateur sensible à la température. Cet oscillateur peut comporter comme élément sensible un élément (diode, etc.) porté par le transducteur pour mesurer au plus près la température de la structure mécanique résonante.

Le modèle de base de calcul de la pression PR peut être un modèle polynomial à deux variables Fr et Ft. Le polynôme est une somme de produits de puissances entières des fréquences Fr et Ft. Les puissances entières peuvent être des puissances de 0 à 5 pour la fréquence Fr et des puissances de 0 à 5 pour la fréquence Ft ; en pratique il n'est pas nécessaire d'aller au-delà de la puissance 5, et les produits de deux fréquences élevées à une puissance peuvent rester tels que la somme des puissances utilisées reste inférieure ou égale à 5. Autrement dit, on utilise les puissances $Fr^0$, $Fr^1$, $Fr^2$, jusqu'à $Fr^5$, et de même pour Ft ; on pourra multiplier $Fr^5$ par $Ft^0$ mais pas par les puissances supérieures de Ft ; on pourra multiplier $Fr^4$ par $Ft^0$ ou $Ft^1$ mais pas au-delà ; on pourra multiplier $Fr^3$ par $Ft^0$, $Ft^1$, ou $Ft^2$, mais pas au-delà, etc.

On peut schématiser le polynôme sous la forme :

$$PR = \sum_{i,j} A_{ij} Fr^i.Ft^j$$

où i et j sont les puissances respectives de Fr et Ft, avec $0 =< i <= 5$, $0 =< j <= 5$, et $0 =< i+j <= 5$ ; $A_{i,j}$ représente le coefficient multiplicatif de chaque produit de deux fréquences portées respectivement à la puissance i et à la puissance j. Le coefficient $A_{i,j}$ est homogène à une pression divisée par une puissance i+j de fréquences.

Les coefficients sont stockés dans le capteur ; ils ont été déterminés en usine individuellement par le test du capteur en utilisant un nombre de couples de grandeurs d'influence P et T suffisant pour l'élaboration du modèle mathématique, par exemple au moins 36 couples différents.

En pratique, certains points sont testés plusieurs fois de manière à intégrer également les phénomènes d'hystérésis thermique et pneumatique.

Il est à noter que le modèle n'est pas nécessairement polynomial. D'autres fonctions mathématiques (logarithme par exemple), une logique floue ou un réseau neuronal peuvent être utilisées en substitution de ce modèle polynomial.

Les circuits électroniques associés au transducteur mesurent les deux fréquences et calculent la pression PR à l'aide du modèle de base. Ils calculent donc une estimation ^PRb en fonction de deux paramètres primaires.

On peut montrer que les valeurs des éléments du circuit résonant série équivalent de la figure sont calculables et sont :

$$Rm = K(d_0/C_0)^2.M_{eff}.\omega_0/2.Q_0.V_0^2$$

$$Lm = Q_0.Rm/\omega r_0$$

$$Cm = 1/[Lm.(\omega r_0)^2]$$

où

K est un coefficient, évalué à 0,35 pour le capteur considéré ici

$d_0$ est la largeur de l'intervalle entre l'électrode d'excitation et la poutre au repos

$M_{eff}$ est la masse réelle de la poutre

$\omega r_0$ est la pulsation à la fréquence de résonance au repos (pour une pression extérieure nulle)

$Q_0$ est le coefficient de surtension de la résonance mécanique. On définit les paramètres secondaires mesurables suivants, qui peuvent avoir une influence sur le calcul de la pression PR : la phase $\phi$ de l'électronique d'asservissement, la tension de polarisation V0 pour l'excitation, la tension d'excitation alternative Ve, et le facteur de surtension $Q_0$ de la poutre vibrante. Ce sont des paramètres secondaires du premier type.

On définit enfin au moins un paramètre secondaire du second type, c'est à dire dont l'influence sur la mesure n'est pas prévisible : ici la consommation électrique du capteur.

Phase de l'électronique d'asservissement

La phase de l'électronique d'asservissement est le déphasage entre la tension alternative d'excitation et le courant alternatif qui parcourt la partie série (Rm, Lm, Cm) du circuit résonant ; la phase a une influence sur le calcul, car elle agit sur la fréquence de résonance elle-même ; la relation entre la phase et la fréquence fait intervenir aussi le coefficient de surtension et peut être modélisée sous la forme :

$$Fr(\phi,Q_0) := Fr_0\, f(\phi,Q_0)]$$

$Fr(\phi)$ est la fréquence de résonance lorsque la phase est $\phi$.

$Fr_{(0)}$ est la fréquence théorique pour une phase nulle.

Cette équation peut s'écrire de manière simplifiée, pour des coefficients de surtension élevés (supérieurs à 10 000) et une phase $\phi$ qui n'est pas trop proche de 90° :

$$Fr(\phi, Q_0) = Fr_{(0).}\big[\,1+ (\tan(\phi)/2Q_0\big]$$

La relation inverse donne :

$$\phi(Fr,Q_0) = g(Fr/Fr_{(0)},Q_0)$$

De ces équations, on peut tirer plusieurs équations d'interdépendance mutuelles de paramètres secondaires et tracer des courbes théoriques ou expérimentales telles que celles de

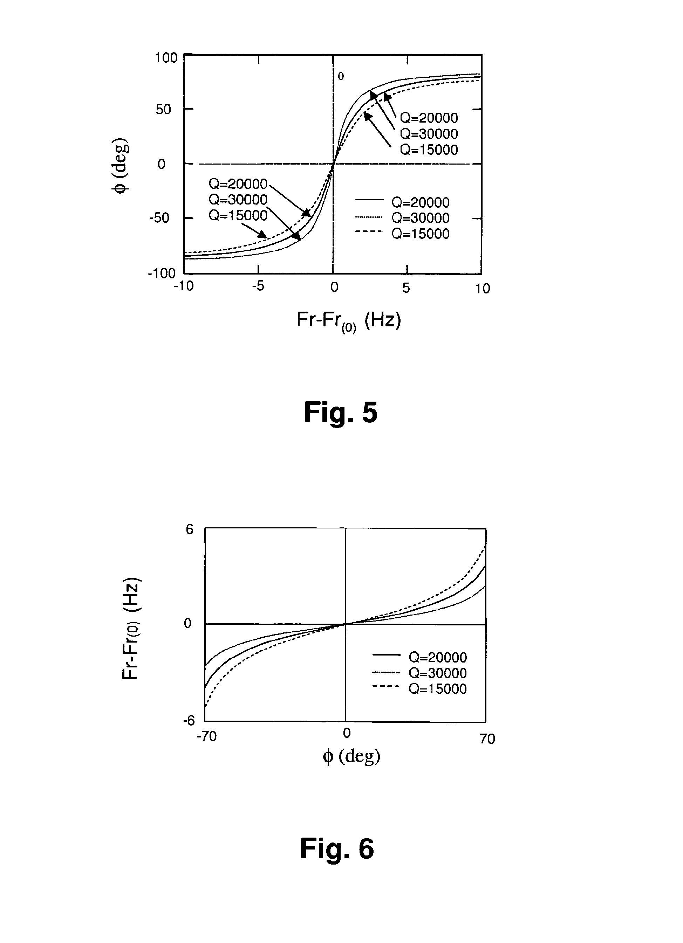

- la figure 5 : phase $\phi$ en fonction d'un écart de fréquences de résonance $Fr-Fr_{(0)}$ entre la fréquence de résonance en présence d'un déphasage non nul et la fréquence de résonance en présence d'un déphasage nul pour diverses valeurs de $Q_0$ ;
- la figure 6 : réciproque de la figure 5 : écart de fréquences de résonance en fonction de la phase pour diverses

valeurs de $Q_0$ ;

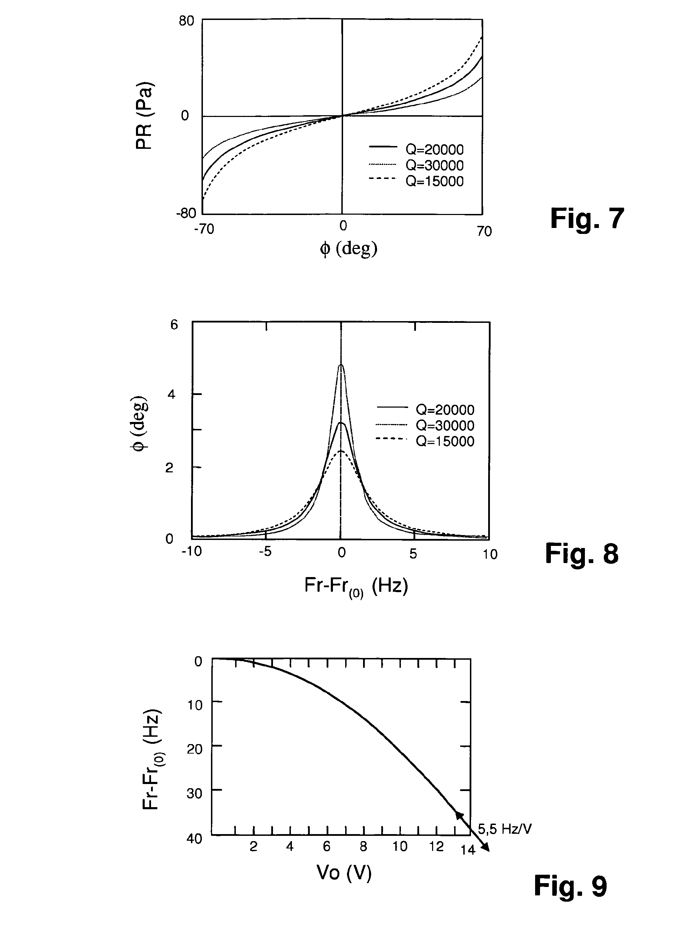

- la figure 7 : erreur de mesure de pression PR (ou biais de pression) proportionnel à l'écart de fréquence (Fr-Fr$_{(0)}$) en fonction de la phase pour diverses valeurs de $Q_0$.

D'autres courbes théoriques ou expérimentales peuvent également être tracées, telles que la conductance G du circuit résonant série en fonction de l'écart de la fréquence de résonance Fr par rapport à la valeur qu'elle devrait avoir Fr$_{(0)}$ compte-tenu de la pression à mesurer (figure 8).

De toutes ces courbes parfois mesurées expérimentalement, parfois déduites de la théorie lorsque les mesures expérimentales sont difficiles ou impossibles à obtenir, on tire notamment des informations de sensibilité de la mesure de pression aux différents paramètres.

Ainsi, on peut par exemple déterminer une sensibilité de la pression à la phase de l'asservissement par l'intermédiaire de la sensibilité de la fréquence de résonance à la phase, et ceci pour différentes valeurs du coefficient de surtension.

Le tableau ci-après, tiré de ces courbes, montre une telle sensibilité de la fréquence de résonance en fonction de la phase autour de 0°, en hertz par degré, ainsi que la sensibilité de l'erreur de pression en fonction de la phase, en pascals par degré de phase, ceci pour trois valeurs différentes du coefficient de surtension $Q_0$.

| $Q_0$ | Sensibilité de la fréquence | Sensibilité du biais de pression |
|---|---|---|
| 20 000 | 0.025 Hz/degré | 0.30 Pa/degré |
| 30 000 | 0.016 Hz/degré | 0.20 Pa/degré |
| 15 000 | 0.030 Hz/degré | 0.4 Pa/degré |

Une dérive anormale du paramètre secondaire "phase $\phi$ de l'asservissement électronique" conduit donc à une erreur de plusieurs dixièmes de pascals par degré de phase sur le calcul de la pression PR.

Tensions d'excitation de la poutre vibrante

De la même manière, on peut examiner la sensibilité du calcul de pression à une dérive de la tension V appliquée à l'électrode d'excitation de la vibration. Cette tension a une composante de polarisation continue V0 et une composante alternative Ve asservie à la fréquence de résonance.

L'impact d'une dérive de la tension de polarisation V0 provient du phénomène de raideur électrostatique (négative) de la poutre, qui varie avec cette tension.

On peut établir la formule suivante montrant l'évolution de la fréquence de résonance Fr en fonction de V0 et Ve par rapport à la valeur Fr$_{(0)}$ qu'elle devrait avoir pour une tension V0 nulle et une tension nominale Ve :

$$Fr = Fr_{(0).}\left[1-[C_0/2d_0{}^2\,].[(V0^2 + Ve^2/2)/k_m\right]^{1/2}$$

$k_m$ est la raideur mécanique effective ; $d_0$ est la largeur de l'intervalle entre l'électrode d'excitation et la poutre au repos, $C_0$ est la capacité entre la poutre vibrante et l'électrode d'excitation, au repos.

La figure 9 représente l'évolution de la fréquence de résonance avec la polarisation V0, en hertz, la référence de fréquence Fr$_{(0)}$ étant pour V0 = 0. La tension de polarisation nominale est d'environ 14 volts.

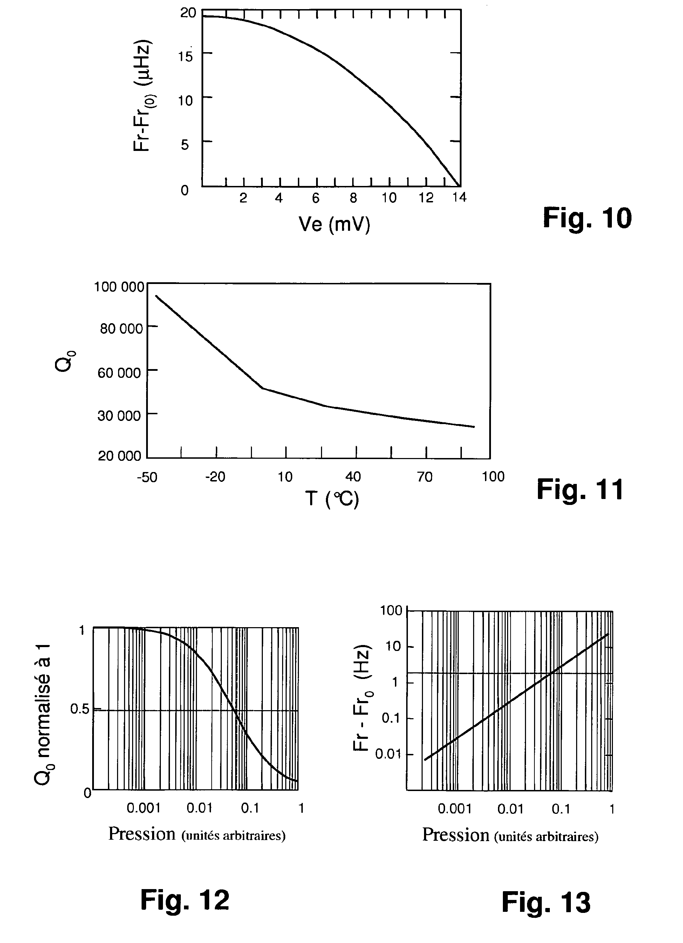

La figure 10 représente l'évolution de la fréquence de résonance avec l'amplitude de la tension alternative Ve, en microhertz car l'impact des variations de Ve est extrêmement faible. La référence Fr$_{(0)}$ est ici pour une tension nominale Ve de 14 mV.

De ces courbes on tire une sensibilité de la fréquence de résonance à la tension V0, de l'ordre de 5,5Hertz par volt autour de la tension nominale de 14 volts, et une sensibilité quasi-nulle de cette fréquence par rapport à l'amplitude de la tension alternative Ve. Cette sensibilité de 5,5 Hz par volt de la fréquence de résonance (paramètre primaire) se traduit par une sensibilité de la mesure de pression PR d'environ -73 pascals/volt.

De plus, on voit que la tension continue de 14 volts induit un biais de fréquence de résonance d'environ 38 Hz par rapport à la fréquence de résonance mécanique naturelle de la poutre non polarisée par V0.

Cependant, si la sensibilité brute à la tension Ve est négligeable sous cet aspect de raideur électrostatique, il y a un autre aspect pour lequel elle est moins négligeable : il s'agit de la prise en compte des non linéarités du mouvement de la poutre, qui sont à la fois une non-linéarité mécanique intrinsèque et à un moindre degré une non-linéarité électrostatique. Un facteur correctif doit être appliqué au calcul de la fréquence de résonance donc de la pression.

Sans entrer dans le détail, on peut montrer que l'écart de fréquence du à ces non-linéarités est proportionnel à $V0^2$ et à $Ve^2$. Il en résulte que la sensibilité de la fréquence par rapport à Ve est proportionnelle à $Ve.V0^2$ et la sensibilité par rapport à V0 est proportionnelle avec le même coefficient de proportionnalité à $V0.Ve^2$. Dans notre exemple de capteur de pression résonant, comme V0 est beaucoup plus élevé que Ve (1000 fois plus), la sensibilité à Ve est mille fois plus élevée que la sensibilité à V0 et on peut négliger cette dernière.

La sensibilité aux variations de Ve en raison des non-linéarités de mouvement de la poutre peut être de 3 pascal/millivolt.

Une dérive anormale de Ve conduit donc à une erreur sur la précision de mesure de pression de plusieurs Pa par millivolt de dérive.

Sensibilité aux capacités parasites $C_p$

La capacité parasite Cp se traduit par un retard de phase qui induit donc une erreur de calcul. On a trouvé, dans l'exemple du capteur de pression analysé une sensibilité de 2 pascals par picofarad de capacité parasite pour un coefficient de surtension $Q_0$ de 20 000.

| $Q_0$ | | Sensibilité à la capacité parasite |
|---|---|---|
| 20 000 | | 2.0 Pa/pF |
| 30 000 | | 0.9 Pa/pF |
| 15 000 | | 3.6 Pa/pF |

Sensibilité au coefficient de surtension du résonateur

Le coefficient de surtension $Q_0$ varie fortement avec la température dans une large plage de température du fait des propriétés thermomécaniques du silicium, et il varie en fonction de la pression mesurée elle-même qui tend à déformer la géométrie des éléments mécaniques.

La figure 11 représente une courbe de variation théorique de $Q_0$ en fonction de la température T.

De plus, le coefficient de surtension varie en fonction de la qualité du vide de la cavité. Le coefficient est maximal pour un vide maximal. Une pénétration d'air ou un dégazage interne du silicium de la structure détériore la qualité du vide et abaisse la valeur du coefficient de surtension, tout simplement parce que le gaz présent dans la cavité joue un rôle d'amortisseur des mouvements de la poutre.

La figure 12 représente une courbe théorique d'évolution du coefficient de surtension en fonction de la pression dans la cavité. Des mesures expérimentales ont montré que cette évolution suit très bien la courbe théorique. Le coefficient de surtension normalisé (coefficient égal à 1 dans les conditions de vide idéal) est divisé par deux lorsque la pression atteint 0,064 millibars.

Il est à noter que la fréquence de résonance de la poutre évolue elle-même en fonction de la perte de vide (environ 10 Hz par millibar). La figure 13 représente cette évolution avec en ordonnée l'écart de la fréquence par rapport à la fréquence pour un vide parfait

En d'autres termes, une dérive anormale du paramètre secondaire "facteur de surtension $Q_0$" conduit à une erreur sur la précision de sortie, et ce paramètre secondaire dépend lui-même d'un paramètre primaire (température) et d'un paramètre non mesurable directement qui est la qualité du vide de la cavité.

Une dérive du vide est un signe de mauvais état de santé du capteur, qui conduit à une dérive de précision non détectée et même un risque d'arrêt de fonctionnement car l'oscillateur qui entretient la vibration de la poutre peut décrocher si la surtension devient trop faible.

Consommation électrique du capteur

La consommation de puissance électrique est simplement le produit de la tension d'alimentation, mesurable par le capteur, et du courant d'alimentation, également facilement mesurable. Elle dépend en particulier de la température, mais elle dépend peu de la pression. On ne peut pas modéliser l'influence de la consommation sur la mesure ; autrement dit, une variation de la consommation électrique peut avoir une influence dans un sens ou dans un autre sur la valeur numérique calculée pour la pression, ou même ne pas avoir d'influence, mais dans tous les cas on ne sait pas établir une représentation de cette influence. La consommation électrique est donc un paramètre secondaire du deuxième type.

Une dérive de la consommation par rapport à sa valeur nominale pour un capteur en parfait état peut être un signe d'un défaut de fonctionnement et donc d'une fiabilité douteuse de la précision de la mesure, mais la mesure n'est pas corrigeable.

Il est donc utile de la prendre en compte pour le diagnostic du capteur. Pour cela, on fait comme pour les autres paramètres secondaires dont l'influence est modélisable, mais bien évidement on ne procède pas à une correction automatique en cas de dérive au-delà d'un seuil. On note le défaut. Associé à d'autres dérives constatées pour les autres paramètres secondaires du premier ou du deuxième type, on peut déterminer la nature du défaut.

Mise en oeuvre de l'invention dans le cas de ce capteur

Le tableau ci-dessous est construit à partir de trois types de paramètres qui s'influencent mutuellement, et il montre ces influences.

- deux paramètres externes d'influence agissant directement sur la mesure : pression extérieure PR dont on veut déterminer une mesure, et température extérieure T ;
- deux paramètres primaires, qui sont des grandeurs manipulables qu'on peut convertir en numérique et qui servent à calculer une estimée de la mesure de pression à l'aide d'un modèle de base qui ne fait intervenir que ces paramètres : Fr fréquence d'oscillation du circuit d'excitation de la vibration de la poutre, Ft fréquence d'un oscillateur sensible à la température,
- quatre paramètres secondaires du premier type, manipulables, mesurables par le capteur, qui peuvent influer sur la mesure et qui peuvent donc entraîner une perte de précision : $Q_0$ facteur de qualité, appelé aussi coefficient de surtension, de la résonance de la poutre, V0 tension de polarisation de l'excitation de la vibration, Ve tension alternative d'excitation, et $\phi$, phase du courant circulant dans le circuit résonant ; le coefficient de surtension pourra être mesuré en pratique par une mesure de gain de contre-réaction dans la boucle d'asservissement,
- un paramètre secondaire du deuxième type, manipulable, mesurable par le capteur, pouvant influer mais sans qu'on sache prédire comment sur la mesure : la consommation électrique W0.

La dépendance d'un paramètre par rapport à un autre est signalée par un + (dépendance forte ou assez forte), un - (dépendance faible), un 0 (quasi-absence de dépendance), ou encore un NA (non applicable). Le paramètre qui influence est indiqué dans la première ligne horizontale du tableau ; le paramètre influencé est indiqué dans la deuxième colonne verticale du tableau.

Les dépendances non applicables sont : dépendance d'un paramètre par rapport à lui-même, ou dépendance des paramètres externes pression et température l'un par rapport à l'autre, ou dépendance d'un paramètre externe par rapport aux paramètres primaires et secondaires internes au capteur.

| Type | | P | T | Fr | Ft | $Q_0$ | V0 | Ve | $\phi$ |
|---|---|---|---|---|---|---|---|---|---|
| Externe | **P** | NA | NA | NA | NA | NA | NA | NA | NA |
| Externe | **T** | NA | NA | NA | NA | NA | NA | NA | NA |
| Primaire | **Fr** | + | + | NA | + | - | - | - | - |
| Primaire | **Ft** | - | + | - | NA | 0 | 0 | 0 | 0 |
| Secondaire-1 | **$Q_0$** | + | + | + | + | NA | 0 | 0 | 0 |
| Secondaire-1 | **V0** | 0 | 0 | 0 | 0 | 0 | NA | 0 | 0 |
| Secondaire-1 | **Ve** | + | + | + | + | + | 0 | NA | + |
| Secondaire-1 | **$\phi$** | 0 | 0 | 0 | 0 | 0 | 0 | 0 | NA |
| Secondaire-2 | **W0** | - | + | 0 | 0 | - | - | 0 | 0 |

Les sensibilités aux dérives des paramètres secondaires du premier type sont déterminées en usine.

On applique les principes de base de l'auto-test selon l'invention :

- établissement d'un modèle de base : ^PRb = Fb(Fr, Ft)
- établissement d'un modèle plus complet ^PRc = Fc(Fr, Ft, Q0, V0, Ve, $\phi$) ;
- estimation des paramètres secondaires (on ne fait pas d'estimation des paramètres primaires puisqu'ici ils dépendent tous des paramètres externes qu'on cherche justement à mesurer) ;
- estimation de ^$Q_0$, fonction de Fr et Ft,
- estimation de ^V0 (a priori l'estimation est une valeur constante, par exemple la tension nominale de 14 volts),

- estimation de ^Ve en fonction de Fr, Ft, et $Q_0$,
- estimation de la phase ^$\phi$ (valeur constante au départ)
- estimation de la consommation ^W0
- mesures de $Q_0$, V0, Ve, $\phi$, W0; le coefficient de surtension peut être mesuré indirectement en observant le gain de contre-réaction de la boucle d'asservissement du circuit oscillant ;
- calcul des résidus entre mesures et estimations de $Q_0$, $V_0$, Ve, $\phi$, W0
- comparaison des résidus des paramètres secondaires, chacun avec un seuil respectif correspondant à un risque de perte de précision
- dans le cas d'un dépassement du seuil pour le résidu ^V0-V0, déclenchement d'un auto-ajustement par ajout à ^PR d'un correctif qui est l'écart ^V0-V0 multiplié par la sensibilité de PR à V0 ;
- dans le cas d'un dépassement du seuil pour le résidu ^$\phi$ - $\phi$, déclenchement d'un auto-ajustement par ajout à PR d'un correctif qui est le produit de ce résidu par la sensibilité de PR à $\phi$ ;
- dans le cas d'un dépassement de seuil du résidu ^Ve-Ve, on peut aussi déclencher un auto-ajustement en raison de la dérive provenant des non-linéarités, avec une sensibilité de la mesure sur Ve évaluée à 3Pa/mV ; on peut aussi vérifier que ce dépassement est cohérent avec un dépassement du seuil pour le résidu ^$Q_0$ - $Q_0$ ou pour le résidu de la phase; en effet c'est principalement le coefficient de surtension qui va avoir un effet sur Ve ;
- dans le cas d'un dépassement d'un seuil du résidu ^$Q_0$ - $Q_0$, si on ne détecte pas par ailleurs un écart trop important du résidu sur la pression, ^PRb - ^PRc, ce dépassement est sans doute causé par une perte de vide de la cavité ; un auto-ajustement est déclenché par application d'un correctif à la fréquence de résonance, donc à l'estimation de pression, en fonction d'une sensibilité de la fréquence de résonance aux variations de $Q_0$ ; on peut ensuite prédire une date à partir de laquelle la précision du capteur sera perdue sans ajustement possible et même une date d'arrêt de fonctionnement du capteur ;
- pas d'ajustement en cas de dépassement d'un seuil de dérive de W0.

Les figures qui suivent représentent des enregistrements réels des paramètres primaires sur un capteur de pression, enregistrements qui servent à élaborer les modèles, les sensibilités, et les seuils utiles à l'auto-test.

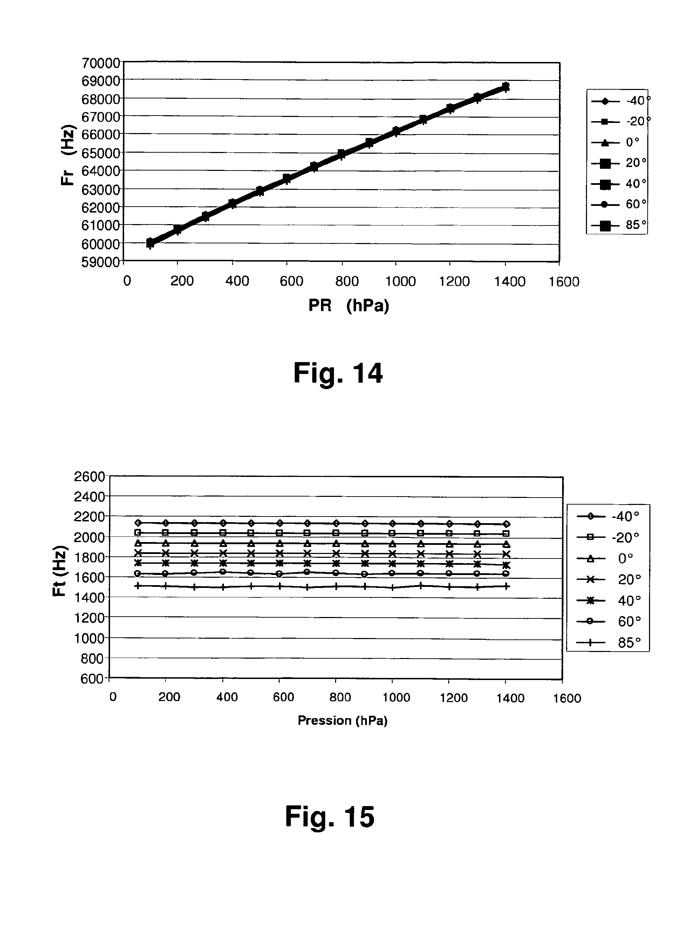

Figure 14 : enregistrement de la fréquence de résonance Fr en fonction de la pression PR à mesurer, pour différentes températures. Les courbes sont très linéaires, presque superposées compte-tenu de l'échelle de la figure, mais elles sont différentes les unes des autres quand on considère la précision demandée et c'est pourquoi on fait intervenir la température dans le calcul.

Figure 15 : enregistrement de la fréquence de l'oscillateur sensible à la température, relié au détecteur de température placé sur le transducteur micro-usiné. Les courbes sont tracées en fonction de la pression pour différentes températures ; on aurait pu tracer des courbes en fonction de la température pour différentes pressions.

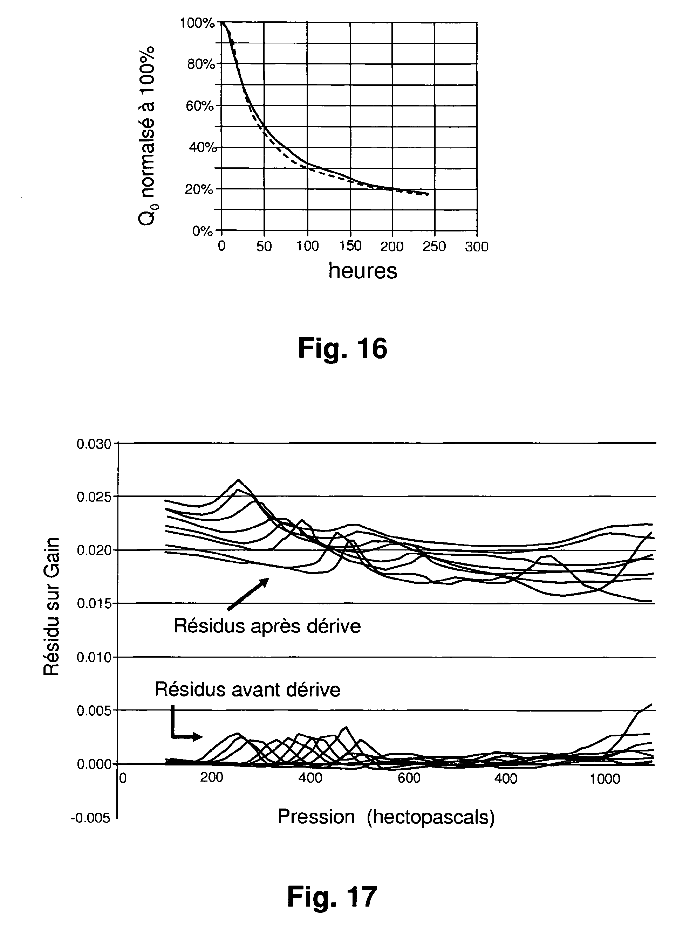

Figure 16 : variation du coefficient de surtension d'un capteur soumis pendant une durée de 250 heures à une détérioration progressive du vide de la cavité ; la surtension est divisée par 5 à la fin de l'opération ; c'est le gain de contre-réaction de la boucle d'asservissement qui est mesuré et qui représente une image assez fidèle du coefficient de surtension. Ce dernier est représenté en ordonnée avec une échelle normalisée à 100% correspondant à l'état du capteur au départ. Deux courbes sont tracées, correspondant à deux capteurs.

Dans un exemple d'expérimentation destiné à la détermination des seuils, on a tracé des courbes représentant les résidus sur le gain de contre-réaction, c'est-à-dire les écarts entre les estimations de gain et le gain mesuré, ceci en fonction de la pression à mesurer, et pour une douzaine de températures échelonnées entre -20°C et +70°C pour un capteur sain. On a tracé les mêmes courbes pour ce capteur auquel on a fait subir une perte de vide aboutissant à une erreur de mesure d'environ 0,25 hectopascal.

Ces courbes sont représentées sur la figure 17. Bien que les gains soient très différents selon la température, les résidus (différence entre estimation et mesure du gain) ne dépendent pas beaucoup de la température et c'est pourquoi les courbes sont très regroupées. Elles sont en fait divisées en deux groupes. En bas, ce sont les courbes du capteur sain. En haut ce sont les courbes pour le capteur ayant subi une dégradation, notamment une perte de vide ayant engendré une erreur de mesure de 0,25 hectopascals. On voit qu'on peut facilement établir un seuil de résidu de gain (entre les deux groupes de courbes) au-delà duquel on sait que le capteur a un problème de santé. Ce seuil porte ici sur le résidu du gain mais on aura compris que c'est l'équivalent d'un seuil sur le coefficient de surtension.

**Revendications**

1. Capteur électronique fournissant des mesures numériques précises de la valeur d'une grandeur physique (PR) avec une tolérance spécifiée, le capteur comportant des moyens pour établir une valeur numérique d'au moins deux paramètres primaires (Fr, Ft) dont l'un au moins (Fr) varie avec la grandeur physique et des moyens de calcul pour fournir une estimation numérique de la grandeur physique à partir des paramètres primaires en utilisant un modèle mathématique de base (Fb[Fr,Ft]) reliant la grandeur physique aux paramètres primaires, le capteur comprenant

- des moyens de mesure d'au moins un paramètre secondaire d'un premier type ($Q_0$, V0, Ve, $\phi$) ayant une influence connue et modélisable sur l'estimation de la grandeur physique,
- des moyens de mesure d'au moins un paramètre secondaire d'un deuxième type (W0) n'ayant pas d'influence connue et modélisable sur l'estimation de la grandeur physique,
chacun des paramètres primaires et secondaires pouvant varier en fonction des autres paramètres primaires selon des fonctions d'estimation connues déterminées théoriquement et/ou expérimentalement à la fabrication du capteur,

- des moyens de calcul d'une estimée (^PRb) de la valeur de la grandeur physique en fonction du modèle de base,
- des moyens de calcul de l'estimée (^V0) de la valeur de chaque paramètre secondaire (V0) en fonction des valeurs mesurées par le capteur pour les paramètres primaires ;
- des moyens de calcul de la différence (V0-^V0) entre la valeur mesurée de chaque paramètre secondaire et les valeurs estimées correspondantes ;
- des moyens de comparaison de chaque différence, avec un seuil respectif, le résultat combiné des différentes comparaisons représentant une information d'état de fonctionnement du capteur et éventuellement de localisation d'une panne ;
- et, des moyens pour modifier automatiquement, en cas de dépassement d'un seuil pour une différence relative à un paramètre secondaire du premier type, le calcul de la valeur de la grandeur physique à partir d'un modèle mathématique plus complet (Fc[Fr,Ft, Q0, V0, Ve, $\phi$)]) faisant intervenir ce paramètre secondaire.

2. Capteur selon la revendication 1, **caractérisé en ce que** la modification automatique est effectuée en prenant en compte une valeur de sensibilité, déterminée à la fabrication du capteur, la sensibilité étant un taux de variation de la mesure fournie par le capteur pour une variation donnée du paramètre secondaire qui a donné lieu à un dépassement de seuil.

3. Capteur selon la revendication 2, **caractérisé en ce que** la modification automatique comprend l'ajout à l'estimation de la grandeur physique faite avec le modèle de base un terme correctif qui est le produit de la sensibilité par l'écart entre la valeur mesurée et la valeur estimée pour le paramètre secondaire qui a donné lieu à un dépassement.

4. Capteur selon l'une des revendications 1 à 3, **caractérisé en ce que**, en cas de dépassement d'un seuil pour certains paramètres secondaires, le capteur effectue un calcul de prévision de perte de précision en fonction du temps, et fournit à l'utilisateur une date prévisible de descente de la précision au-dessous de la tolérance spécifiée pour la mesure de la grandeur physique.

5. Capteur selon la revendication 4, **caractérisé en ce que** le capteur fournit également à l'utilisateur une date de prévision de cessation de fourniture d'une mesure significative de la grandeur physique.

6. Capteur selon l'une des revendications précédentes, **caractérisé en ce que** le capteur est un capteur de pression, ou d'accélération, ou de rotation, utilisant le calcul de la fréquence de résonance (Fr) d'une poutre vibrante placée dans une cavité sous vide.

7. Capteur selon la revendication 6, **caractérisé en ce que** les paramètres primaires sont la fréquence de résonance de la poutre et la température (T) du capteur ou une fréquence (Ft) d'un oscillateur contrôlé par un détecteur de température du capteur.

8. Capteur selon la revendication 7, **caractérisé en ce que** les paramètres secondaires du premier type comprennent au moins l'un des paramètres de la liste suivante : le facteur de surtension ($Q_0$) de la résonance de la poutre, la tension de polarisation (V0) appliquée à une électrode d'excitation de la vibration de la poutre, l'amplitude (Ve) de la tension alternative appliquée par une boucle d'asservissement à la l'électrode d'excitation de la vibration, la phase ($\phi$) du courant appliqué à l'électrode d'excitation de la boucle d'asservissement.

9. Capteur selon la revendication 8, **caractérisé en ce que** les paramètres secondaires du deuxième type comprennent au moins la consommation électrique.

**Patentansprüche**

1. Elektronischer Sensor, der präzise digitale Messwerte einer physikalischen Größe (PR) mit einer vorgegebenen Toleranz liefert, wobei der Sensor Folgendes umfasst: Mittel zum Festlegen eines digitalen Wertes von wenigstens zwei primären Parametern (Fr, Ft), von denen wenigstens einer (Fr) mit der physikalischen Größe variiert, und Rechenmittel zum Liefern eines digitalen Schätzwertes der physikalischen Größe auf der Basis der primären Parameter unter Verwendung eines mathematischen Basismodells (Fb[Fr, Ft]), das die physikalische Größe mit den primären Parametern verbindet, wobei der Sensor Folgendes umfasst:

   Mittel zum Messen wenigstens eines sekundären Parameters eines primären Typs ($Q_0$, V0, Ve, $\phi$) mit einem bekannten Einfluss, der auf die Schätzung der physikalischen Größe modellierbar ist,
   Mittel zum Messen wenigstens eines sekundären Parameters eines zweiten Typs (W0) ohne bekannten Einfluss, der auf die Schätzung der physikalischen Größe modellierbar ist,
   wobei jeder der primären und sekundären Parameter in Abhängigkeit von anderen primären Parametern gemäß bei der Herstellung des Sensors theoretisch und/oder experimentell bestimmten bekannten Schätzfunktionen variieren kann,
   Mittel zum Berechnen eines Schätzwertes (^PRb) der physikalischen Größe in Abhängigkeit von dem Basismodell,
   Mittel zum Berechnen des Schätzwertes (^V0) jedes sekundären Parameters (V0) in Abhängigkeit von den mit dem Sensor gemessenen Werten für die primären Parameter;
   Mittel zum Berechnen der Differenz (V0-^V0) zwischen dem gemessenen Wert jedes sekundären Parameters und den entsprechenden Schätzwerten;
   Mittel zum Vergleichen jeder Differenz mit einem jeweiligen Schwellenwert, wobei das kombinierte Ergebnis der verschiedenen Vergleiche eine Information über den Funktionszustand des Sensors und eventuell den Ort eines Defekts repräsentiert;
   und Mittel zum automatischen Modifizieren, falls ein Schwellenwert für eine Differenz in Bezug auf einen sekundären Parameter des primären Typs überschritten wird, der Berechnung des Wertes der physikalischen Größe auf der Basis eines kompletteren mathematischen Modells (Fc[Fr, Ft, $Q_0$, V0, Ve, $\phi$)]), den Eingriff dieses sekundären Parameters hervorrufend.

2. Sensor nach Anspruch 1, **dadurch gekennzeichnet, dass** die automatische Modifikation unter Berücksichtigung eines Empfindlichkeitswertes erfolgt, ermittelt bei der Herstellung des Sensors, wobei die Empfindlichkeit eine Rate der Variation des von dem Sensor gelieferten Messwerts für eine gegebene Variation des sekundären Parameters ist, die zu der Überschreitung des Schwellenwerts geführt hat.

3. Sensor nach Anspruch 2, **dadurch gekennzeichnet, dass** die automatische Modifikation das Addieren eines Korrekturterms zum Schätzwert der physikalischen Größe umfasst, erhalten mit dem Basismodell, der das Produkt aus der Empfindlichkeit und der Abweichung zwischen dem Messwert und dem Schätzwert für den sekundären Parameter ist, die zu der Überschreitung geführt hat.

4. Sensor nach einem der Ansprüche 1 bis 3, **dadurch gekennzeichnet, dass** bei einer Überschreitung eines Schwellenwertes für bestimmte sekundäre Parameter der Sensor eine Vorausberechnung von Präzisionsverlusten in Abhängigkeit von der Zeit durchführt und dem Benutzer ein vorhersehbares Datum für das Abfallen der Präzision unter die vorgegebene Toleranz für den Messwert der physikalischen Größe liefert.

5. Sensor nach Anspruch 4, **dadurch gekennzeichnet, dass** der Sensor dem Benutzer auch ein Unterbrechungsvorhersagedatum über die Lieferung eines signifikanten Messwertes der physikalischen Größe liefert.

6. Sensor nach einem der vorherigen Ansprüche, **dadurch gekennzeichnet, dass** der Sensor ein Drucksensor oder ein Beschleunigungssensor oder ein Rotationssensor ist, unter Verwendung der Berechnung der Resonanzfrequenz (Fr) eines in einem Hohlraum unter Vakuum platzierten vibrierenden Trägers.

7. Sensor nach Anspruch 6, **dadurch gekennzeichnet, dass** die primären Parameter die Resonanzfrequenz des Trägers und die Temperatur (T) des Sensors oder eine Frequenz (Ft) eines Oszillators sind, der von einem Temperaturwächter des Sensors gesteuert wird.

8. Sensor nach Anspruch 7, **dadurch gekennzeichnet, dass** die sekundären Parameter des ersten Typs wenigstens einen der Parameter aus der folgenden Liste umfassen: den Überspannungsfaktor ($Q_0$) der Resonanz des Trägers, die Polarisationsspannung (V0), die an eine Trägervibrationsanregungselektrode angelegt wird, die Amplitude (Ve) der Wechselspannung, die von einer Regelschleife an die Vibrationsanregungselektrode angelegt wird, die Phase ($\phi$) des Stroms, der der Anregungselektrode der Regelschleife zugeführt wird.

**9.** Sensor nach Anspruch 8, **dadurch gekennzeichnet, dass** die sekundären Parameter des zweiten Typs wenigstens die Leistungsaufnahme umfassen.

**Claims**

**1.** Electronic sensor which provides precise numerical measurements of the value of a physical magnitude (PR) with a specified tolerance, the sensor comprising means for establishing a numerical value of at least two primary parameters (Fr, Ft), at least one (Fr) of which varies with the physical magnitude, and calculation means for providing a numerical estimation of the physical magnitude from primary parameters using a mathematical base model (Fb[Fr,Ft]) which connects the physical magnitude to the primary parameters, the sensor comprising
means for measuring at least one secondary parameter of a first type ($Q_0$, V0, Ve, $\phi$) which have a known influence that can be modelled on the estimation of the physical magnitude,
means for measuring at least one secondary parameter of a second type (W0) which does not have a known influence that can be modelled on the estimation of the physical magnitude,
each of the primary and secondary parameters being able to vary in accordance with the other primary parameters according to known estimation functions which are determined theoretically and/or experimentally when the sensor is produced,
means for calculating an estimate (^PRb) of the value of the physical magnitude in accordance with the base model,
means for calculating the estimate (^V0) of the value of each secondary parameter (V0) in accordance with the values measured by the sensor for the primary parameters;
means for calculating the difference (V0-^V0) between the measured value of each secondary parameter and the corresponding estimated values;
means for comparing each difference with a respective threshold, the combined result of the different comparisons representing information relating to the operating state of the sensor and where applicable location of a malfunction;
and means for automatically modifying, in the event that a threshold is exceeded for a difference relating to a secondary parameter of the first type, the calculation of the value of the physical magnitude from a more complete mathematical model (Fc[Fr,Ft, $Q_0$, V0, Ve, $\phi$)]) which causes this secondary parameter to become involved.

**2.** Sensor according to claim 1, **characterised in that** the automatic modification is carried out taking into account a sensitivity value, determined when the sensor is produced, the sensitivity being a variation level of the measurement provided by the sensor for a specific variation of the secondary parameter which gave rise to the threshold being exceeded.

**3.** Sensor according to claim 2, **characterised in that** the automatic modification comprises the addition to the estimation of the physical magnitude carried out with the base model of a corrective term which is the product of the sensitivity and the deviation between the measured value and the estimated value for the secondary parameter which has given rise to a value being exceeded.

**4.** Sensor according to any one of claims 1 to 3, **characterised in that**, in the event of a threshold being exceeded for some secondary parameters, the sensor carries out a calculation of prediction of loss of precision in accordance with time, and provides the user with a predictable date for when the precision falls below the tolerance specified for the measurement of the physical magnitude.

**5.** Sensor according to claim 4, **characterised in that** the sensor also provides the user with a date for prediction of the stoppage of provision of a measurement which signifies the physical magnitude.

**6.** Sensor according to any one of the preceding claims, **characterised in that** the sensor is a pressure or acceleration or rotation sensor, which uses the calculation of the resonance frequency (Fr) of a vibrating beam which is placed in a cavity under reduced pressure.

**7.** Sensor according to claim 6, **characterised in that** the primary parameters are the resonance frequency of the beam and the temperature (T) of the sensor or a frequency (Ft) of an oscillator which is controlled by a temperature detector of the sensor.

8. Sensor according to claim 7, **characterised in that** the secondary parameters of the first type comprise at least one of the parameters from the following list: the excess voltage ($Q_0$) factor of the resonance of the beam, the polarisation voltage (V0) applied to an electrode for exciting the vibration of the beam, the amplitude (Ve) of the alternating voltage applied by a control loop to the electrode for excitation of the vibration, the phase ($\phi$) of the current applied to the electrode for excitation of the control loop.

9. Sensor according to claim 8, **characterised in that** the secondary parameters of the second type comprise at least the electrical consumption.

**Fig. 1**

Poutre vibrante    Détecteur de température

Plaque Si →

Plaque Si →

Plaque Si →

membrane           cavité

# Fig. 2

$I_d$

$C_0+C_p$

Rm

Lm

Cm

V

# Fig. 3

Polarisation                    Résonateur à poutre vibrante

V0

Ve.Cos$\omega$t

Ampli

Atténuateur

Contrôle
de gain

Sortie
Mesure de fréquence

Filtre Passe Bande

# Fig. 4

**Fig. 5**

**Fig. 6**

**Fig. 7**

**Fig. 8**

**Fig. 9**

Fig. 10

Fig. 11

Fig. 12

Fig. 13

**Fig. 14**

**Fig. 15**

Fig. 16

Fig. 17

**EP 2 604 981 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

*   EP 2343505 A2